(19) Europäisches Patentamt
European Patent Office
Office européen des brevets

(11) EP 1 544 579 A1

(12) EUROPEAN PATENT APPLICATION

(43) Date of publication:
22.06.2005 Bulletin 2005/25

(51) Int Cl.[7]: G01D 5/16, G01D 5/244

(21) Application number: 04029593.3

(22) Date of filing: 14.12.2004

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 16.12.2003 JP 2003417737

(71) Applicant: ALPS ELECTRIC CO., LTD.
Tokyo 145-8501 (JP)

(72) Inventor: Hasegawa, Kazuo
Ota-ku Tokyo 145-8501 (JP)

(74) Representative: Klunker . Schmitt-Nilson . Hirsch
Winzererstrasse 106
80797 München (DE)

# (54) Angle detecting sensor with a phase compensating function

(57) There is provided an angle detecting sensor having a phase compensating function capable of detecting a rotation angle even in a case where chip substrates are roughly mounted. First function calculating means 14 calculates a non-compensated rotation angle $\phi$ of a measured object from SIN and COS signals output form a sensing unit 1. At this time, in a case where there is an error (non-compensated phase difference) between the non-compensated rotation angle $\phi$ and an input angle $\theta$, phase compensating means 15 calculates phase compensated values $\delta$ for respective angles by approximating the error with a trigonometric function and removes the phase compensated value $\delta$ from the non-compensated rotation angle $\phi$, so that the chip substrates can be roughly mounted. As a result, even in a case where there is a phase error $\alpha$ between the SIN and COS signals, it is possible to detect the rotation angel of the measured object with a high accuracy.

FIG. 1

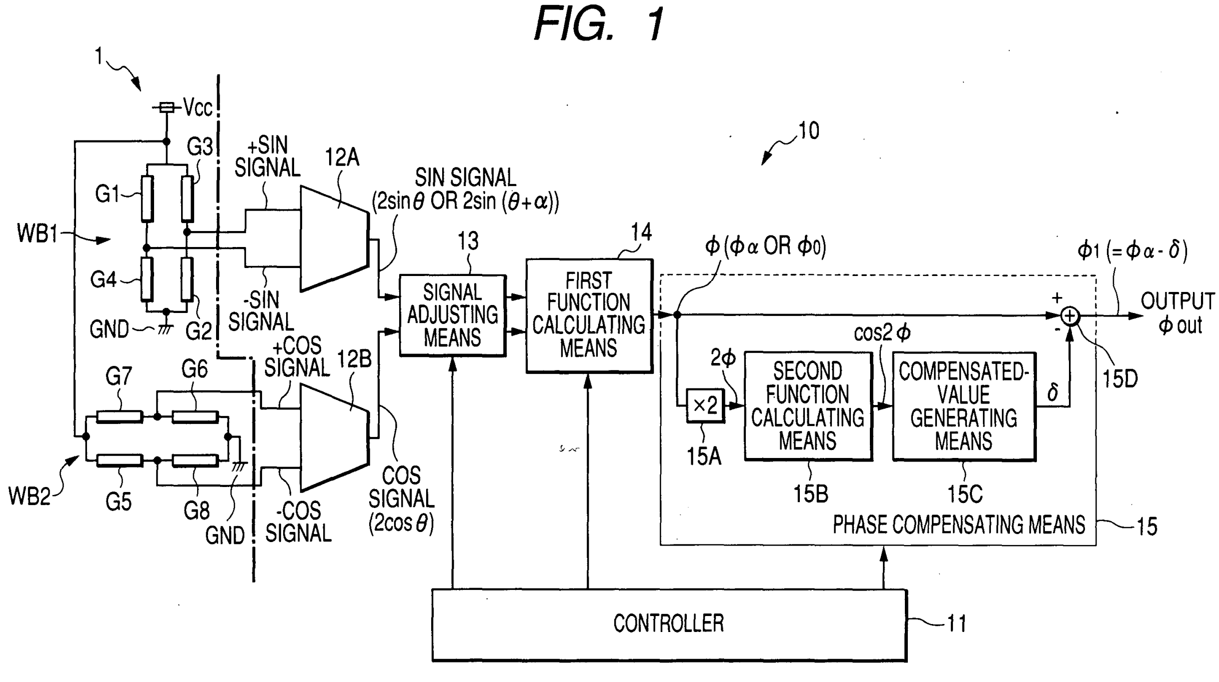




Printed by Jouve, 75001 PARIS (FR)

## Description

BACKGROUND OF THE INVENTION

1. Field of the Invention

The present invention relates to an angle detecting sensor using a magnetoresistive element such as a GMR element, and more particularly, an angle detecting sensor having a phase compensating function capable of improving a detection accuracy of a detected rotation angle even in a case where an error occurs between signals output from a magnetoresistive element.

2. Description of the Related Art

A rotation angle of a steering wheel of a vehicle is detected by using an angle detecting sensor having a wheel which rotates in synchronization with a rotating member such as a steering shaft. A sensing unit of the angle detecting sensor employs magnetoresistive elements which detect a magnetic field to generate an output signal. The angle detecting sensors using the magnetoresistive elements are disclosed to precedent technical documents such as the following Patent Documents 1, 2, 3, and 4.

Fig. 12 is a plan view showing a construction of an angle detecting sensor 100. The angle detecting sensor 100 comprises a wheel 102 which rotates about a rotation center O and a package 101 in an inner portion of the wheel 102.

Four chip substrates (wafers) K1, K2, K3, and K4 are disposed at positions which are symmetric with respect to the rotation center O (positions having a difference of 90° from each other about the rotation center O) in the package 101. Each of the four chip substrates includes two magnetoresistive elements such as GMR elements (a total of eight GMR elements are represented by G1 to G8). Each of the GMR elements basically has a laminated structure of an exchange bias layer (anti-ferromagnetic layer), a fixed layer (a pinned magnetic layer), a nonmagnetic layer, and a free layer (free magnetic layer).

Namely, the GMR elements G1 and G2, the GMR elements G3 and G4, the GMR elements G5 and G6, and the GMR elements G7 and G8 are mounted on the chip substrates K1, K2, K3, and K4, respectively. The GMR elements G1 ~ G4 mounted on the chip substrates K1 and K2 constitute a first bridge circuit by connecting in parallel a serially-connected circuit of the GMR element G1 and the GMR element G4 and another serially-connected circuit of the GMR element G3 and the GMR element G2. Similarly, the GMR elements G5 - G8 mounted on the chip substrates K3 and K4 constitute a second bridge circuit by connecting in parallel a serially-connected circuit of the GMR element G5 and the GMR element G8 and another serially-connected circuit of the GMR element G7 and the GMR element G6 (see Fig. 1).

Magnets M1 and M2 are attached on inner surface of the wheel 102. The N pole of the one magnet M1 is directed to the rotation center O; and the S pole of the other magnet M2 is directed to the rotation center O. Therefore, a constant external magnetic field H is generated between the magnets M1 and M2.

When the wheel 102 rotates in accordance with rotation of a rotating member (a measured object), the magnets M1 and M2 can scan the package 101. At this time, by the external magnetic field H, a direction of magnetization of the free layer constituting each of the GMR elements G1 ~ G8 is varied. Therefore, the resistance value of each of the GMR elements G1 ~ G8 is varied corresponding to an angle between the magnetization direction of the fixed layer and the magnetization direction of the free layer. As a result, +sin and -sing signals are output from the first bridge circuit; and +cos and -cos signals having a phase difference of 90° from the ±sin signals output from the first bridge circuit are output from the second bridge circuit.

In a control unit, the +sin and -sin signals are differentially amplified to generate a SIN signal (a sine wave signal); and the +cos and -cos signals are differentially amplified to generate a COS signal (a cosine wave signal). Next, in the control unit, a tangent value (tan) is calculated from the SIN signal (sine wave signal) and the COS signal (cosine wave signal); and an inverse tangent value (arctan) is calculated, so that the rotation angle of the rotating member can be detected.

[Patent Document 1] Japanese Unexamined Patent Application Publication No. 2002-303536
[Patent Document 2] Japanese Unexamined Patent Application Publication No. 2000-35470
[Patent Document 3] Japanese Unexamined Patent Application Publication No. 2003-106866
[Patent Document 4] Japanese Unexamined Patent Application Publication No. 2003-66127

In the aforementioned angle detecting sensor 100, in order to detect the rotating angle of the rotating member with a high accuracy, it is necessary to maintain the phase difference of 90° between the sine wave signal and the cosine wave signal with a high accuracy. In addition, the magnetization directions (direction of magnetization) e of the fixed layers of the two GMR elements mounted on the same chip substrate are equal to each other. For example, assuming that the magnetization direction e of the chip substrate K1 is the +Y direction, the magnetization directions e of the chip substrates K2, K3, and K4 are the -Y, +X, and -X directions, respectively. Therefore, it is necessary to maintain the difference of 90° between the magnetization directions e of adjacent chips with a high accuracy.

However, since the magnetization directions e of the fixed layers of the GMR elements G1 ~ G8 cannot be seen with human's eyes, it is difficult to mount the chip substrates K1 ~ K4 on the package while maintaining the difference of 90° between the magnetization directions e with a high accuracy.

For example, in a case where the chip substrates K2 and K3 are mounted at positions slanting from defined positions by 1.5° in the arrow direction and the chip substrate K4 is mounted at a position slanting from a defined position by 1.5° in the reverse arrow direction with reference to the chip substrate K1 in Fig. 12, it is determined that the phase difference between the sine wave signal and the cosine wave signal is 90 ± 2.25°. In this case, there is a problem in that it is impossible to detect the rotating angle of the rotating member with a high accuracy.

On the other hand, disclosed is a technique for maintaining the difference of 90° between the magnetization directions e with a high accuracy by cutting out the chip substrates with a high accuracy, aligning the magnetization directions e of the GMR elements G1 ~ G8 in parallel to one side thereof with a high accuracy, and mounting the chip substrates on the package with maintaining the difference of 90° between the chip substrates with an angle correcting device such as an image recognizing device. Although the magnetization directions e can have the difference of 90° with a high accuracy by the technique, there is a problem in that production costs and manufacturing steps of the chip substrates increase and assembling time and costs increase.

SUMMARY OF THE INVENTION

In order to solve the problems in the prior art, an object of the present invention is to provide an angle detecting sensor having a phase compensating means function capable of improving a detection accuracy of a rotation angle even in a case where a phase difference between a sine wave signal and a cosine wave signal is deviated from 90°, that is, a case where chip substrates are not accurately mounted on a package.

The present invention provides an angle detecting sensor having a sensing unit for generating a rotational magnetic field corresponding to rotation of a measured object, sensing the rotational magnetic field, and outputting an output signal corresponding to an input angle of rotation, and a signal processing unit for calculating an rotation angle of the measured object from the output signal, wherein the signal processing unit comprises: at least signal converting means for generating SIN and COS signals from the output signal; first function calculating means for calculating a non-compensated rotation angle of the measured object from the SIN and COS signals; and phase compensating means for calculating a phase compensated value approximate to a non-compensated phase difference which is a difference between the non-compensated rotation angle and the input angle and calculating the rotation angle of the measured object by removing the phase compensated value from the non-compensated rotation angle.

In the present invention, in consideration that the phase difference included non-compensated rotation angle is a periodic function which can be artificially simulated using an approximate trigonometric function, the detection accuracy of the rotation angle can be improved by subtracting the artificially simulated phase compensated value from a non-compensated rotation angle including the phase difference with predetermined calculation. As a result, complicated steps of obtaining a large amount of data for compensation of angles and storing the data in storage means are unnecessary.

For example, the phase compensating means may comprise: at least second function calculating means for generating a phase compensated value by approximating the non-compensated phase difference with a trigonometric function; and subtracting means for subtracting the phase compensated value from the non-compensated rotation angle.

In addition, the first function calculating means may comprise: a TAN process for calculating a tangent value from the SIN and COS signals; and an ATAN process for calculating an inverse tangent value from the tangent value to calculate the non-compensated rotation angle.

In addition, if the input angle input as the rotation angle of the measured object, a phase difference between the SIN and COS signals, the non-compensated rotation angle, and the phase compensated value for respective angles are represented by $\theta$, $\alpha$, $\phi_\alpha$, and $\delta$, respectively, the phase compensated value $\delta$ may be approximated by the following Equation 1:

$$\beta=(\alpha/2)\cdot\{1+\cos(2\phi_\alpha)\} \qquad \text{[Equation 1]}$$

where, $\phi_\alpha=\arctan\{\sin(\theta+\alpha)/\cos\theta\}$.

In addition, the first function calculating means and the second function calculating means may be constructed with a single function calculator having numerical calculation software using a CORDIC algorithm.

In addition, a plurality of GMR elements may be disposed in chip substrates of the sensing unit, and the GMR elements may be constitute bridge circuits.

In addition, the sensing unit may include a wheel for scanning the plurality of GMR elements by rotating together with the measured object, and magnets may be attached on the wheel.

According to an angle detecting sensor of the present invention, even in a case where chip substrates are roughly mount on a package and there is a phase error between SIN and COS signals, since the phase error can be compensated by using predetermined calculation, it is possible to detect a rotation angle with a high accuracy.

In addition, since the chip substrates can be roughly mounted, it is possible to simplify assembling steps. Moreover, it is possible to reduce assembling costs.

BRIEF DESCRIPTION OF THE DRAWINGS

Fig. 1 is a constructional block diagram showing a construction of an angle detecting sensor according to the present invention.

Fig. 2 is a graph showing SIN and COS signals, that is, output signals of bridge circuits in a case where a phase error occurs.

Fig. 3 is a graph showing a relation between a non-compensated rotation angle $\phi_\alpha$ and an input angle $\theta$ after an ATAN process.

Fig. 4 is a graph showing a continuous function transformed from the function of Fig. 3.

Fig. 5 is a graph showing a difference between a non-compensated rotation angle $\phi_\alpha$ and an input angle $\theta$ as a non-compensated phase difference ($\phi_\alpha$-$\theta$).

Fig. 6 is a graph showing a relation between an input angle and a phase compensated value.

Fig. 7 is a graph showing a phase compensated rotation angle $\phi_1$ obtained by subtracting a phase compensated value $\delta$ from each value of non-compensated rotation angles $\phi_\alpha$.

Fig. 8 is a graph showing a compensated phase difference ($\phi_1$-$\theta$) obtained by subtracting an input angle $\theta$ from a phase compensated rotation angle $\phi_1$.

Fig. 9 is a graph showing a relation between non-compensated phase difference and compensated phase difference in logarithm scale.

Fig. 10 is a graph showing SIN and COS signals, that is, output signals of bridge circuits in an ideal case.

Fig. 11 is a graph showing a continuous function transformed from a function between a non-compensated rotation angle $\phi_\alpha$ an input angle $\theta$ after an ATAN process.

Fig. 12 is a plan view showing a construction of an angle detecting sensor.

DESCRIPTION OF THE PREFERRED EMBODIMENT

Fig. 1 is a constructional block diagram showing a construction of an angle detecting sensor according to the present invention. The later-described angle detecting sensor detects a rotation angle of a rotating member such as a steering shaft of a vehicle.

Referring to Fig. 1, the angle detecting sensor comprises a sensing unit 1 and a signal processing unit 10 for processing an output signal of the sensing unit 1. In the figure, the sensing unit 1 and signal processing unit 10 are shown in the left and right portions of line P-P, respectively.

The detailed construction of the sensing unit 1 is similar to the construction described in the 'Description of the Related Art'. Namely, as shown in Fig. 12, the sensing unit 1 comprises a wheel 102 which freely rotates about a rotation center O and a package 101 in an inner portion of the wheel 102, on which four chip substrates (wafers) K1, K2, K3, and K4 are mounted. The four chip substrates K1 ~ K4 are disposed at positions which are symmetric with respect to the rotation center O (positions having a difference of 90° from each other about the rotation center O) in the package 101.

Each of the four chip substrates includes two GMR elements, each of which basically has a laminated structure of an exchange bias layer (anti-ferromagnetic layer), a fixed layer (a pinned magnetic layer), a nonmagnetic layer, and a free layer (a free magnetic layer). Therefore, a total of the eight GMR elements represented by G1 to G8 are provided.

The chip substrates are obtained by forming the plurality of GMR elements as a film on a single large substrate, aligning a direction of magnetization (magnetization direction) of the fixed layer with a specific direction under an external magnetic field, and cutting the large substrate into individual chip substrates K1 ~ K4. Therefore, the magnetization directions of the fixed layers of the two GMR elements disposed on the same chip substrate are equal to each other. Next, the chip substrates K1 ~ K4 are mounted on the package 101 to have a difference of about 90° between the magnetization directions in the adjacent chip substrates. In addition, although the difference of 90° is preferably maintained with a high accuracy, it is not necessary to maintain the difference of 90° with a high accuracy.

The GMR elements G1 ~ G8 mounted on the chip substrates K1 ~ K4 constitute first and second bridge circuits WB1 and WB2. As shown in Fig. 1, the first bridge circuit WB1 is constructed with the GMR elements G1, G2, G3, and G4 disposed on the chip substrates K1 and K2 which are symmetric with respect to the rotation center O. Namely, the first bridge circuit WB1 is constructed by connecting in parallel a serially-connected circuit of the GMR element G1 and the GMR element G4 and another serially-connected circuit of the GMR element G3 and the GMR element G2. Similarly, the second bridge circuit WB2 is constructed with the GMR elements G5, G6, G7, and G8 disposed on the chip substrates K3 and K4 which are symmetric with respect to the rotation center O. Namely, the second bridge circuit WB2 is constructed by connecting in parallel a serially-connected circuit of the GMR element G5 and the GMR element G8 and another serially-connected circuit of the GMR element G7 and the GMR element G6.

In addition, one end of each of the connected-in-parallel first and second bridge circuits WB1 and WB2 is connected to a power source Vcc, and the other end thereof is connected to a ground GND.

The wheel 102 and the rotating member, that is, the measured object such as the steering shaft, are coupled with, for example, a gear. Therefore, in accordance with rotation of the rotating member, the wheel 102 rotates. Since the wheel 102 rotates in accordance with rotation of the rotating member, the magnets M1 and M2 can scan the package 101.

Since an external magnetic field H generated between the magnets M1 and M2 is applied to each of the GMR elements G1 ~ G8 in the package 101, the magnetization direction of the free layer constituting each of the GMR elements G1 ~ G8 is varied. Therefore, the resistance value of each of the GMR elements G1 ~ G8 is varied corresponding to an angle between the magnetization direction of the fixed layer and the magnetization direction of the free layer. As a result, two sine wave signals having a phase difference of 180° from each other are output from the connection portion of the GMR elements G3 and G2 and the connection portion of the GMR elements G1 and G4 in the first bridge circuit WB1, respectively. In addition, two sine wave signals having a phase difference of 180 from each other are output from the connection portion of the GMR elements G7 and G6 and the connection portion of the GMR elements G5 and G8 in the second bridge circuit WB2, respectively.

However, similarly to the chip substrates K1 and K2 which are symmetric with respect to the rotation center O, the chip substrates K3 and K4 which are symmetric with respect to the rotation center O are disposed at the positions different from each other approximately by 90° with respect to the rotation center O. Therefore, assuming that two signals output from the first bridge circuit WB1 are +sin and -sin signals, respectively, two signals output from the second bridge circuit WB2 are a +cos signal and a -cos signal.

As shown in the embodiment, for example, in a case where the wheel 102 rotates clockwise, if the sine wave signal output from the connection portion of the GMR elements G3 and G2 in the first bridge circuit WB1 is a +sin signal, a -sin signal is output from the connection portion of the GMR elements G1 and G4, a +cos signal is output from the GMR elements G7 and G6 in the second bridge circuit WB2, and a -cos signal is output from the connection portion of the GMR elements G5 and G8.

The signal processing unit 10 mainly comprises controlling means 11, first signal converting means 12A, second signal converting means 12B, signal adjusting means 13, first function calculating means 14, and phase compensating means 15.

The controlling means 11 constructed with a CPU, memory means, etc., has a function of generally controlling a series of signal processing in the signal adjusting means 13, the first function calculating means 14, and the phase compensating means 15. The first signal converting means 12A has a function of generating a SIN signal by taking a difference between the two types of +sin and -sin signals output from the first bridge circuit WB1, amplifying the SIN signal, and converting the SIN signal into digital data by using A/D conversion. Similarly, the second signal converting means 12B has a function of generating a COS signal by taking a difference between the two types of +cos and -cos signals output from the second bridge circuit WB2, amplifying the COS signal, and converting the COS signal into digital data by using A/D conversion.

Here, for example, it is assumed that amplitude coefficients are represented by A1, A2, B1 and B2, offset coefficients are represented by a1, a2, b1 and b2, and the +sin, -sin, +cos, and -cos signals are presented by $+A1\cdot\sin\theta+a1$, $-A2\cdot\sin\theta-a2$, $+B1\cdot\cos\theta+b1$, and $-B2\cdot\cos\theta-b2$, respectively. In this case, the SIN signal generated by the first signal converting means 12A is $(+A1\cdot\sin\theta+a1) - (-A2\cdot\sin\theta-a2)=(A1+A2)\cdot\sin\theta+(a1+a2)$. Similarly, the COS signal generated by the second signal converting means 12B is $(+B1\cdot\cos\theta+b1) - (-B2\cdot\cos\theta-b2)=(B1+B2)\cdot\cos\theta+(b1+b2)$.

The signal adjusting means 13 has a function of performing offset or gain adjusting process on the SIN and COS signals and matching amplitude references (0 points) and amounts (amplitudes) of the two signals. Namely, in the aforementioned case, the gain adjusting process means matching the amplitude coefficients of the SIN and COS signals to the same value by A1+A2=B1+B2; and the offset adjusting process means removing a difference between the amplitude references from the origins (0 points) by al+a2=b1+b2=0.

The first function calculating means 14 has numerical calculation software for calculating functions sin, cos, tan, $\tan^{-1}$=arctan, sinh, cosh, exp, log, etc., such as software using, for example, a well-known CORDIC (Coordinate Rotation Digital Computer) algorithm. In addition, the first function calculating means comprises a TAN process for calculating a tangent value (tan=SIN signal/COS signal) from the digital SIN-signal data and the digital COS-signal data and an ATAN process for calculating an inverse tangent value (arctan(SIN signal/COS signal)) from the tangent value obtained by the TAN process to calculate the non-compensated rotation angle $\phi$ of the measured object.

The phase compensating means 15 comprises angle doubling means 15A, second function calculating means 15B using the aforementioned CORDIC algorithm, compensated value generating means 15C, and subtracting means 15D. The angle doubling means 15A has a function of doubling the non-compensated rotation angle $\phi$ obtained by the ATAN process of the first function calculating means 14 to output a double angle $2\phi$. In addition, the angle doubling means 15A which is constructed with, for example, shift registers can easily obtain the double angle $2\phi$ (angle doubling) by shifting the binary data corresponding to the non-compensated rotation angle $\phi$ leftwards by 1 bit.

The second function calculating means 15B has a function of generating and outputting $\cos(2\phi)$ and $\sin(2\phi)$ from the double angle $2\phi$ output from the angle doubling means 15A by using the CORDIC algorithm.

In addition, the first function calculating means 14 and the second function calculating means 15B are constructed to share a single function calculator; and each calculation may be performed by using the function calculator under the control of the controlling means 11.

The compensated value generating means 15C has a function of generating a phase compensated value $\delta$ by using the cos(2$\phi$) and the sin(2$\phi$) output from the second function calculating means 15B. The detailed method of generating the phase compensated value $\delta$ will be described later.

The subtracting means 15D has a function of subtracting the phase compensated value $\delta$ from the non-compensated rotation angle $\phi$ obtained by the ATAN process of the first function calculating means 14. As a result, it is possible to maintain the phase difference of 90° between the SIN and COS signals with a high accuracy.

Now, operations of the angle detecting sensor 100 will be described.

(1) Case of the Phase Difference between the SIN and COS Signals: 90° + $\alpha$

Fig. 2 is a graph showing SIN and COS signals, that is, output signals of bridge circuits in a case where a phase error occurs; Fig. 3 is a graph showing a relation between a non-compensated rotation angle $\phi_\alpha$ and an input angle $\theta$ of the measured object after an ATAN process; and Fig. 4 is a graph showing a continuous function transformed from the function of Fig. 3.

In a case where the difference of 90° between the magnetization directions of the fixed layers constituting the GMR elements G1 ~ G8 mounted on the chip substrates K1 ~ K4 is not maintained between the adjacent chip substrates, the phase difference between the SIN and COS signals output from the first and second signal converting means 12A and 12B, respectively, is deviated from the original phase difference of 90°.

The rotation angle of the wheel 102, that is, the input angle input from the angle detecting sensor 100 and the associated phase error (deviation from the phase difference of 90°) are indicated by $\theta$ and $\alpha$, respectively. In addition, the +cos and -cos signals output from the second bridge circuit WB2 are indicated by +cos$\theta$ and -cos$\theta$, respectively. Here, for a convenience of description, it is assumed that the amplitude coefficients A1, A2, B1 and B2 have a relation of A1=A2=B1=B2=1, and the offset coefficients a1, a2, b1 and b2 have a relation of a1=a2=b1=b2=0. Even in the assumption, since the signal adjusting means 13 or the TAN process shows the same effect that each of the coefficients is eliminated, there is no problem.

With reference to the +cos and -cos signals, the +sin and -sin signals output from the first bridge circuit WB1 can be represented by +sin($\theta+\alpha$) and -sin($\theta+\alpha$), respectively. As a result, the SIN signal output from the first bridge circuit WB1 is +sin($\theta+\alpha$) - (-sin($\theta+\alpha$))=2sin($\theta+\alpha$); and the COS signal output form the second bridge circuit WB2 is +cos($\theta+\alpha$) - (cos($\theta+\alpha$)) =2cos($\theta+\alpha$). These are depicted in Fig. 2. In addition, in the following examples of the phase error $\alpha$ shown in Figs. 2 to 9, $\alpha$= 20°.

The SIN and COS signals output from the respective first and second signal converting means 12A and 12B are subject to the offset and gain adjusting processes in the signal adjusting means 13. Next, the tangent value (tan=SIN signal/COS signal) is calculated as 2sin($\theta+\alpha$)/2cos$\theta$=sin($\theta+\alpha$)/cos$\theta$ by the TAN process in the first function calculating means 14. In addition, the inverse tangent value is calculated by the ATAN process. However, in a case where the phase error $\alpha$ occurs, if the non-compensated rotation angle output from the first function calculating means 14 is represented by $\phi_\alpha$, $\phi_\alpha$=arctan(sin($\theta+\alpha$)/cos$\theta$). In a case where the phase error $\alpha$ occurs, the relation between the non-compensated rotation angle $\phi_\alpha$ and the input angle $\theta$ obtained by the ATAN process is a discontinuous periodic function as shown in Fig. 3.

As shown in Fig. 3, if the ATAN process: arctan (sin($\theta+\alpha$)/cos$\theta$) is preformed (the inverse tangent value calculation), the same value occurs twice within 360° (one period). However, since a combination of the original SIN and COS signals having the same value do not exist within 360°, it is possible to set the number of the non-compensated rotation angle $\phi_\alpha$ for the input angle $\theta$ by 1 by using the combination. Therefore, from the combination of the SIN and COS signals, the region of the input angle $\theta$ is partitioned into two regions (0 ± 90°, 180 ± 90°) or four regions (0 ~ 90°, 90 ~ 180°, 180 ~ 270°, 270 ~ 360°); and the aforementioned calculation is performed on the regions, so that the non-compensated rotation angle $\phi_\alpha$ can be represented by a continuous function for the one period (360°) of the input angle $\theta$, which is depicted in Fig. 4. In Fig. 4, the input angle $\theta$ and the non-compensated rotation angle $\phi_\alpha$ have a one-to-once correspondence. However, the non-compensated rotation angle $\phi_\alpha$ after the ATAN process has a curve where a trigonometric function is superposed on a linearly increasing function.

Fig. 5 is a graph showing a difference between a non-compensated rotation angle $\phi_\alpha$ and an input angle $\theta$ as a non-compensated phase difference ($\phi_\alpha$-$\theta$).

Here, by obtaining the difference between the non-compensated rotation angle $\phi_\alpha$ and the input angle $\theta$ as the non-compensated phase difference ($\phi_\alpha$-$\theta$), it can be understood that a relation between the input angle $\theta$ and the non-compensated phase difference ($\phi_\alpha$-$\theta$) is a period function (a trigonometric function) having a form of a sine wave as shown in Fig. 5. Since the non-compensated phase difference ($\phi_\alpha$-$\theta$) is generated due to the input angle $\theta$, the non-compensated phase difference ($\phi_\alpha$-$\theta$) is generated due to the fact that the difference of 90° between the magnetization directions of the fixed layers constituting the GMR elements G1 ~ G8 mounted on the chip substrates K1 ~ K4 is not maintained between the adjacent chip substrates.

By analyzing the waveform of the non-compensated phase difference ($\phi_\alpha$-$\theta$) shown in Fig. 5, although a peak value of the amplitude is 20° which is relatively equal to the phase error $\alpha$ (= 20°), it can be understood that the angular frequency thereof is twice angular frequencies of the SIN and COS signals (see Fig. 2). Therefore, if the waveform of the non-compensated phase difference ($\phi_\alpha$-$\theta$) is represented with an approximate trigonometric function based on Fig. 5, the following Equation 2 can be obtained. In addition, the value $\delta$ for each non-compensated rotation angle $\phi_\alpha$ obtained by using the approximate trigonometric function representing the non-compensated phase difference ($\phi_\alpha$-$\theta$) is referred to as a phase compensated value.

[Equation 2]

$$\delta=\{\alpha\cdot\cos(2\phi_\alpha)+\alpha\}/2$$

$$=(\alpha/2)\cdot\{1+\cos(2\phi_\alpha)\}$$

where, $\phi_\alpha$=arctan{sin($\theta$+$\alpha$)/cos$\theta$).

The value of $2\phi_\alpha$ in Equation 2 can be obtained from the angle doubling means 15A of the phase compensating means 15; and cos($2\phi_\alpha$) can be obtained from the second function calculating means 15B. The phase compensated value $\delta$ can be generated by using the phase error $\alpha$ and the value of cos($2\phi_\alpha$) in the compensated value generating means 15C.

In addition, although the phase error $\alpha$ is equal to the peak value of the amplitude, it is an unknown variable until the wheel 102 rotates. Therefore, preferably, the phase error $\alpha$ may be selected as a peak value of the amplitude obtained from the non-compensated phase difference ($\phi_\alpha$-$\theta$) calculated by the controlling means 11 at the time when the wheel 102 starts rotating.

Fig. 6 is a graph showing a relation between an input angle $\theta$ and a phase compensated value $\delta$ obtained by artificially simulating the non-compensated phase difference ($\phi_\alpha$-$\theta$) of Fig. 5 by using Equation 2. By comparing the non-compensated phase difference ($\phi_\alpha$-$\theta$) of Fig. 5 with the simulated waveform of Fig. 6, it can be understood that both are relatively equal to each other and the waveform of non-compensated phase difference ($\phi_\alpha$-$\theta$) (Fig. 5) can be completely reproduced by using phase compensated value (the approximate trigonometric function of Equation 2) $\delta$.

Fig. 7 is a graph showing a phase compensated rotation angle $\phi_1$ (= ($\phi_\alpha$-$\theta$) obtained by subtracting a phase compensated value $\delta$ having the simulated waveform of Fig. 6 from each value of non-compensated rotation angles $\phi_\alpha$ of Fig. 4 for each input angle $\theta$. By comparing Fig. 7 with Fig. 4, it can be understood that the portion (phase compensated value $\delta$) of the trigonometric function is removed from the non-compensated rotation angle $\phi_\alpha$ where the trigonometric function is superposed on the linearly increasing function shown in Fig. 4.

Namely, in the signal processing unit 10, since the non-compensated phase difference ($\phi_\alpha$-$\theta$) shown in Fig. 5 can be substantially removed from the non-compensated rotation angle $\phi_\alpha$ by subtracting ($\phi_\alpha$-$\delta$) the phase compensated value $\delta$ (see Fig. 6) generated by using the angle doubling means 15A, the second function calculating means, and the subtracting means 15C of the phase compensating means 15 from each value of the non-compensated rotation angles $\phi_\alpha$ (see Fig. 4) for each input angle $\theta$, the phase compensated rotation angle $\phi_1$ can be proportional to the input angle $\theta$.

Therefore, if the phase compensated rotation angle $\phi_1$ output from the phase compensating means 15 is used as an angle output $\phi$out of the angle detecting sensor, it is possible to detect the rotation angle, where the effect of the phase error $\alpha$ is removed, with a high accuracy.

Fig. 8 is a graph showing a compensated phase difference ($\phi_1$-$\theta$) obtained by subtracting an input angle $\theta$ from a phase compensated rotation angle $\phi_1$ of Fig. 7. By comparing the peak value of the non-compensated phase difference ($\phi_\alpha$-$\theta$) of Fig. 5 with the peak value of the compensated phase difference ($\phi_1$-$\theta$), in a case of the phase error $\alpha$ being 20°, the non-compensated phase difference ($\phi_\alpha$-$\theta$) is 20° but the compensated phase difference ($\phi_1$-$\theta$) is about 1°. Therefore, it can be understood that the output effort can be reduced by about 1/20 by the aforementioned compensation.

Fig. 9 is a graph showing a relation between non-compensated phase difference and compensated phase difference in logarithm scale.

As shown in Fig. 9, it can be understood that, as the non-compensated phase difference ($\phi_\alpha$-$\theta$) is smaller, the compensated phase difference ($\phi_1$-$\theta$) can be further reduced. In addition, it can be understood that, if the non-compensated phase difference ($\phi_\alpha$-$\theta$) is reduced by one order, the compensated phase difference ($\phi_1$-$\theta$) can be further reduced by three orders.

(2) Case of the Phase Difference between the SIN and COS Signals: 90°

Fig. 10 is a graph showing SIN and COS signals, that is, output signals of bridge circuits in an ideal case where the phase error does not occur; and Fig. 11 is a graph showing a continuous function transformed from a function between a non-compensated rotation angle $\phi_\alpha$ an input angle $\theta$ after an ATAN process.

An ideal case for comparison, that is, a case where the magnetization directions e of the fixed layers constituting the GMR elements G1 to G8 mounted on the chip substrates K1 to K4 are maintained in a difference of 90° between the adjacent chip substrates, will be described.

In the ideal case, as shown in Fig. 10, the phase difference between the SIN and COS signals output from the first and second signal converting means 12A and 12B, respectively, is accurately maintained to be 90° and the phase error $\alpha$ is 0 ($\alpha$=0).

Therefore, assuming that the rotation angle of the wheel 102, that is, the input angle input to the angle detecting sensor 100 is indicated by $\theta$, the SIN signal output from the first signal converting means 12A is $2\sin\theta$ and the COS signal output from the second signal converting means 12B is $2\cos\theta$. In the ideal case, the output of the first function calculating means 14 is set to the non-compensated rotation angle $\phi_0$.

The SIN and COS signals are subject to the offset and gain adjusting processes in the signal adjusting means 13 and then are output to the first function calculating means 14. $2\sin\theta/2\cos\theta=\tan\theta$ is calculated through the TAN process of the first function calculating means 14. Next, the ATAN process is performed and thus the non-compensated rotation angle $\phi_0$ output from the first function calculating means 14 is calculated as $\phi_0=\arctan(\tan\theta)$. In the ideal case where the phase error is 0 ($\alpha$=0), the non-compensated rotation angle $\phi_0$ is equal to the input angle $\theta$ ($\phi_0=\theta$).

Here, similarly to Fig. 4, the non-compensated rotation angle $\phi_0$ obtained by the ATAN process can be represented by a continuous function for the one period (360°) of the input angle $\theta$, which is depicted in Fig. 11.

As shown in Fig. 11, the non-compensated rotation angle $\phi_0$ of the first function calculation means 14 after the ATAN process is proportional to the input angle $\theta$. Therefore, if the non-compensated rotation angle $\phi_0$ after the ATAN process is processed by the phase compensating means 15, the phase compensated rotation angle $\phi_1$ in an ideal case is equal to the non-compensated rotation angle $\phi_0$ ($\phi_1=\phi_0$)

Namely, although the controlling means 11 performs an operation of obtaining the peak value of the amplitude by calculating the non-compensated phase difference ($\phi$-$\theta$) at the time when the rotating member starts rotating as described in the aforementioned case (1), in the ideal case, the non-compensated rotation angle $\phi_0$ is equal to the input angle $\theta$ ($\phi_0=\theta$) and the non-compensated rotation angle ($\phi_0-\theta$) is 0.

In addition, in the ideal case, since the phase error $\alpha$ is 0 ($\alpha$ =0), the phase compensated value $\delta$ obtained from Equation 2 is 0 ($\delta$=0), so that the phase compensated rotation angle $\phi_1$ output from the phase compensating means 15 is 0 ($\phi_1=\phi_0=0$). Therefore, the angle output $\phi$out of the angle detecting sensor 100 is $\phi$out=$\phi_1=\phi_0=\theta$), so that the angle output $\phi$out becomes the input angle $\theta$.

As described above, since the angle detecting sensor 100 according to the present invention comprises the phase compensating means 15, when the phase error $\alpha$ occurs between the SIN signal output from the first signal converting means 12A and the COS signal output from the second signal converting means 12B, that is, when the magnetization directions e of the fixed magnetic layers constituting the GMR elements G1 to G8 mounted on the chip substrates K1 to K4 accurately maintain 90° between the adjacent substrates, it is possible to detect the rotation angle (input angle $\theta$) of rotating member with a high accuracy.

Since it is not necessary to dispose the chip substrates K1 to K4 in the package 101 with a high accuracy, it is possible to simplify the assembling steps or to make highly-accurate manufacturing apparatuses unnecessary.

It can be also considered that the phase compensated values $\delta$ for each input angle $\theta$ are stored in the storage means and are then read out from the storage means to perform the compensation whenever rotation input is performed. However, since the respective angle detecting sensors 100 have different phase compensated values $\delta$, troublesome processes that the respective angle detecting sensors 100 acquire the phase compensated values $\delta$, convert the acquired phase compensated values $\delta$ into data, and then store the data in the storage means can be made unnecessary. Since the phase compensated value $\delta$ can be calculated on the basis of the rotation input as described above, even when the phase error $\alpha$ is changed due to some reasons, the phase error $\alpha$ can be acquired again to compensate for the non-compensated rotation angle $\phi_\alpha$ with the accurate phase compensated value $\delta$, so that it is always possible to obtain the angle outputs $\phi_\alpha$ and $\phi$out with a high accuracy.

## Claims

1. An angle detecting sensor having a sensing unit for generating a rotational magnetic field corresponding to rotation of a measured object, sensing the rotational magnetic field, and outputting an output signal corresponding to an input angle of rotation, and a signal processing unit for calculating a rotation angle of the measured object from the output signal,

   wherein the signal processing unit comprises: at least signal converting means for generating SIN and COS signals from the output signal; first function calculating means for calculating a non-compensated rotation angle of the measured object from the SIN and COS signals; and phase compensating means for calculating a phase compensated value approximate to a non-compensated phase difference which is a difference between the non-compensated rotation angle and the input angle and calculating the rotation angle of the measured object by removing the phase compensated value from the non-compensated rotation angle.

2. The angle detecting sensor according to Claim 1, wherein the phase compensating means comprises: at least second function calculating means for generating a phase compensated value by approximating the non-compensated phase difference with a trigonometric function; and subtracting means for subtracting the phase compensated value from the non-compensated rotation angle.

**3.** The angle detecting sensor according to Claim 1 or 2, wherein the first function calculating means comprises: a TAN process for calculating a tangent value from the SIN and COS signals; and an ATAN process for calculating an inverse tangent value from the tangent value to calculate the non-compensated rotation angle.

**4.** The angle detecting sensor according to Claim 2 or 3, wherein if the input angle input as the rotation angle of the measured object, a phase difference between the SIN and COS signals, the non-compensated rotation angle, and the phase compensated value for respective angles are represented by $\theta$, $\alpha$, $\phi_\alpha$, and $\delta$, respectively, the phase compensated value $\delta$ is approximated by the following Equation 3:

$$\beta=(\alpha/2)\cdot(1+\cos(2\phi_\alpha)\}$$

[Equation 3]

where, $\phi_\alpha=\arctan\{\sin(\theta+\alpha)/\cos\theta\}$.

**5.** The angle detecting sensor according to one of Claims 1 to 3, wherein the first function calculating means and the second function calculating means are constructed with a single function calculator having numerical calculation software using a CORDIC algorithm.

**6.** The angle detecting sensor according to any of Claims 1-5,

wherein a plurality of GMR elements are disposed in chip substrates of the sensing unit, and

wherein the GMR elements constitute bridge circuits.

**7.** The angle detecting sensor according to Claim 1 or 6,

wherein the sensing unit includes a wheel for scanning the plurality of GMR elements by rotating together with the measured object, and

wherein magnets are attached on the wheel.

FIG. 1

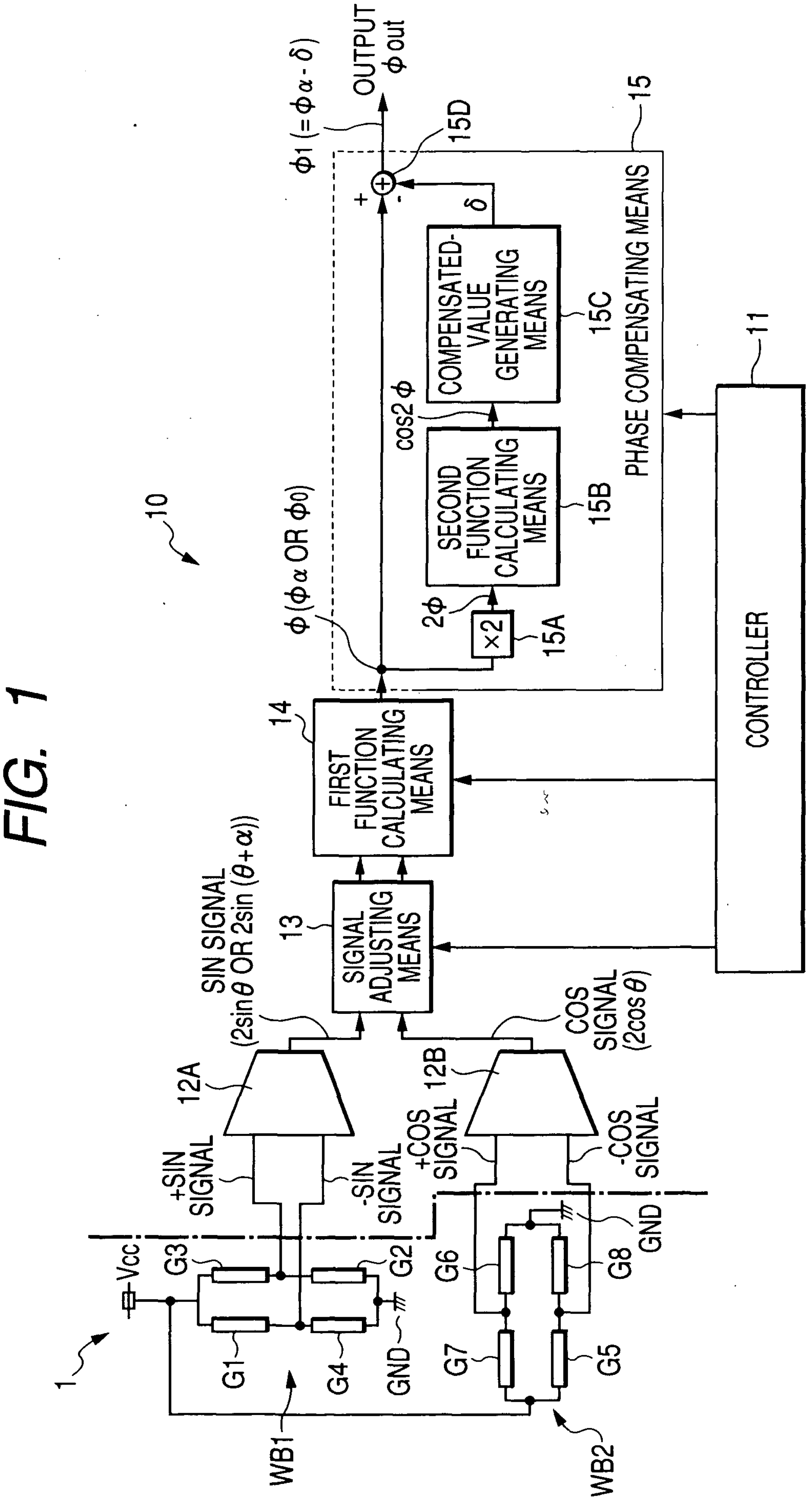
OUTPUT
φout
φ1 (=φα - δ)
15D
15
+
-
δ
COMPENSATED-VALUE GENERATING MEANS
15C
cos2φ
SECOND FUNCTION CALCULATING MEANS
15B
PHASE COMPENSATING MEANS
11
10
φ(φα OR φ0)
2φ
×2
15A
CONTROLLER
14
FIRST FUNCTION CALCULATING MEANS
SIN SIGNAL (2sinθ OR 2sin(θ+α))
13
SIGNAL ADJUSTING MEANS
COS SIGNAL (2cosθ)
12A
12B
+SIN SIGNAL
-SIN SIGNAL
+COS SIGNAL
-COS SIGNAL
Vcc
G3
G2
G1
G4
GND
G6
G8
G7
G5
GND
1
WB1
WB2

FIG. 2

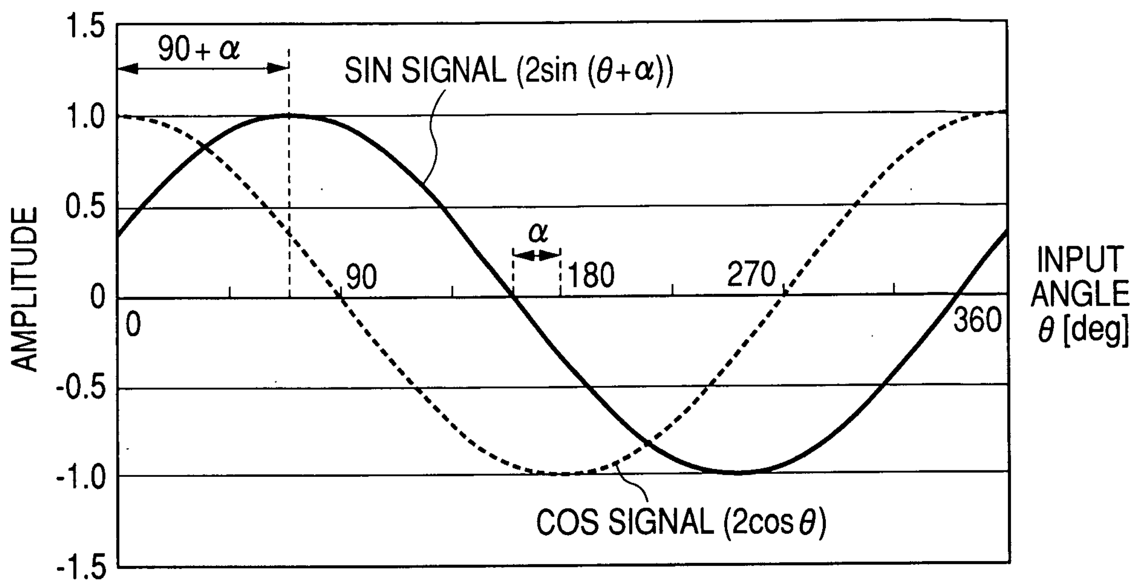

90+α
SIN SIGNAL (2sin (θ+α))
α
1.5
1.0
0.5
0
-0.5
-1.0
-1.5
AMPLITUDE
0
90
180
270
360
INPUT ANGLE θ [deg]
COS SIGNAL (2cos θ)


FIG. 3

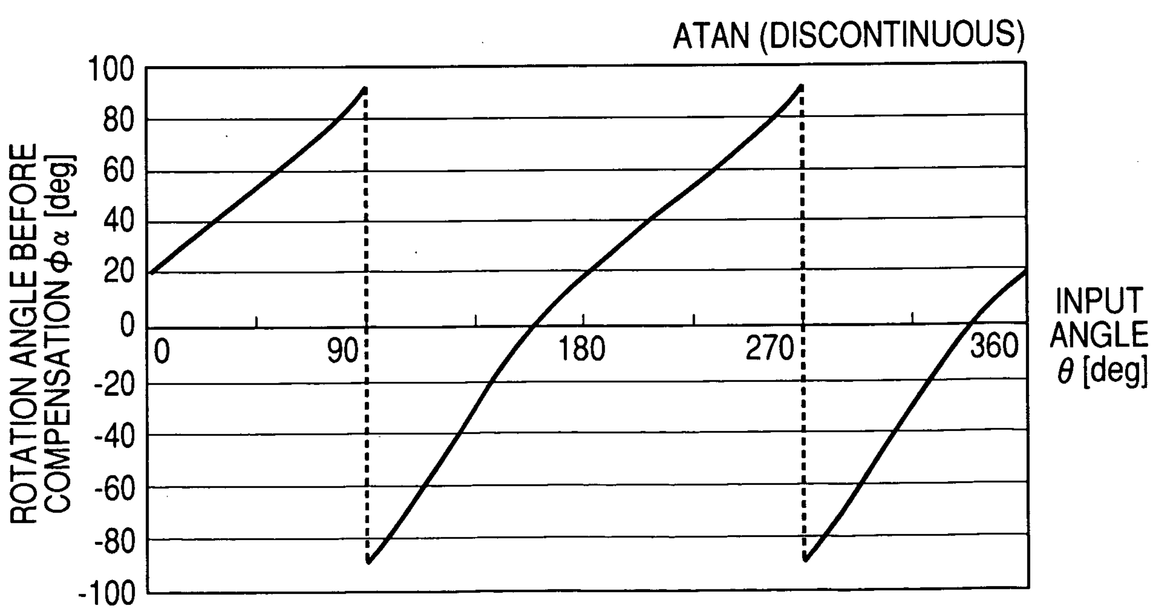

ATAN (DISCONTINUOUS)
100
80
60
40
20
0
-20
-40
-60
-80
-100
ROTATION ANGLE BEFORE COMPENSATION φα [deg]
0
90
180
270
360
INPUT ANGLE θ [deg]

FIG. 4

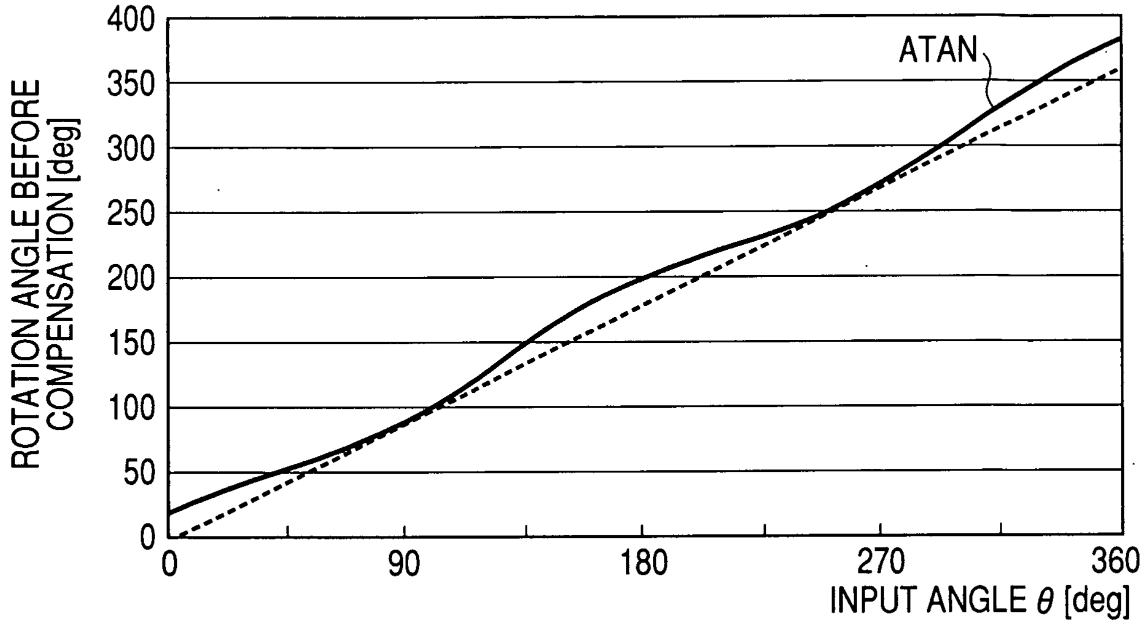
ROTATION ANGLE BEFORE COMPENSATION [deg]
400
350
300
250
200
150
100
50
0
ATAN
0
90
180
270
360
INPUT ANGLE θ [deg]

FIG. 5

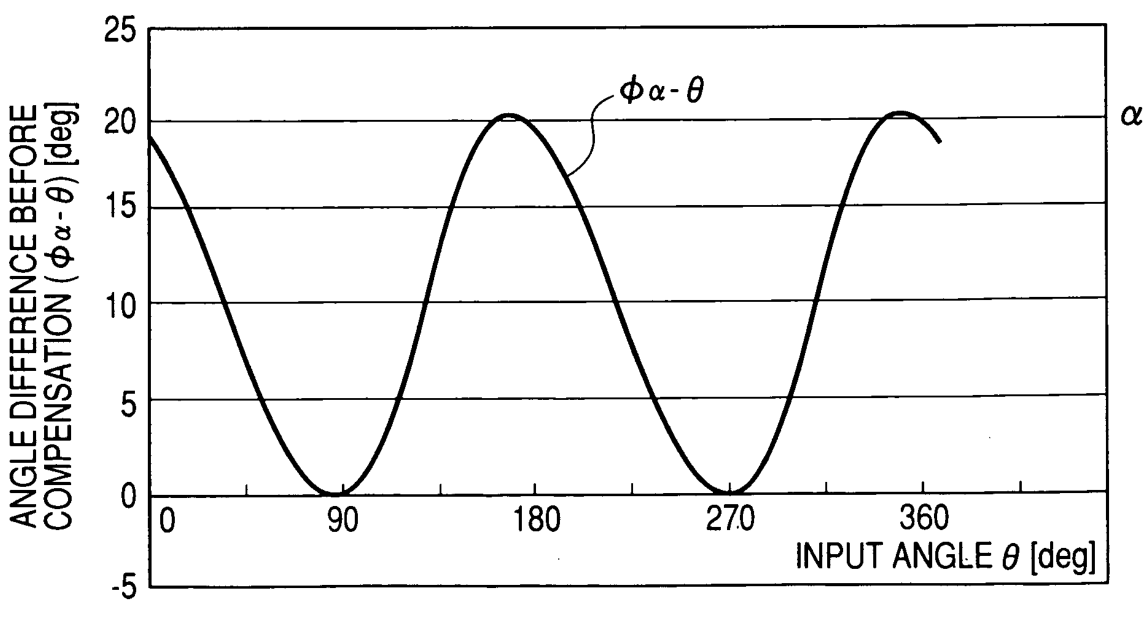
ANGLE DIFFERENCE BEFORE COMPENSATION (Φα - θ) [deg]
25
20
15
10
5
0
-5
Φα - θ
α
0
90
180
270
360
INPUT ANGLE θ [deg]

# FIG. 6

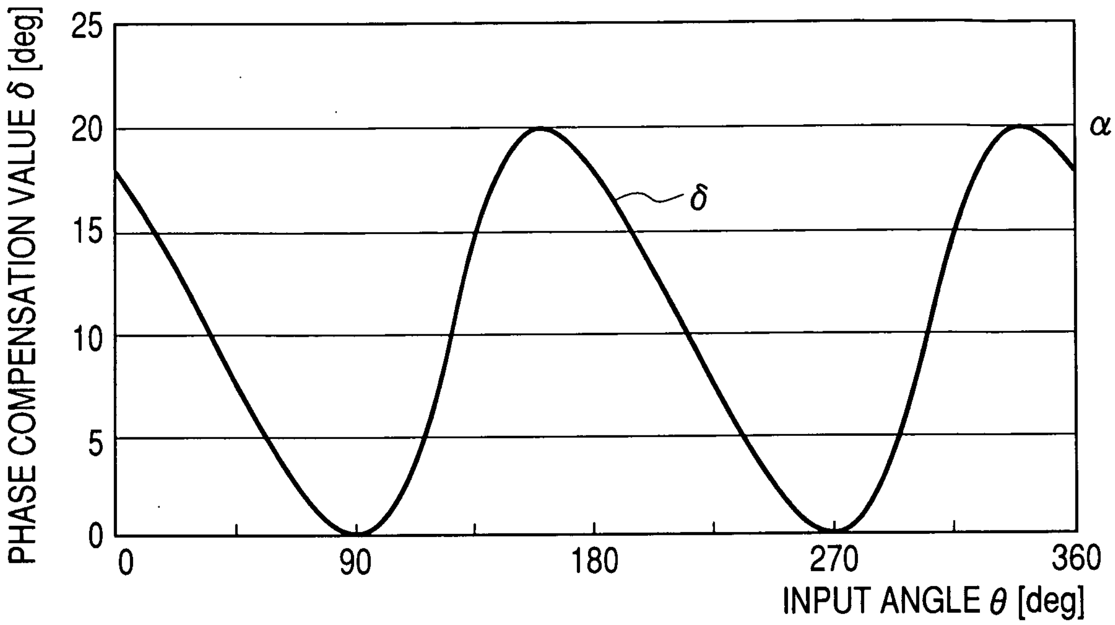
PHASE COMPENSATION VALUE δ [deg]
25
20
15
10
5
0
0
90
180
270
360
INPUT ANGLE θ [deg]
α
δ

# FIG. 7

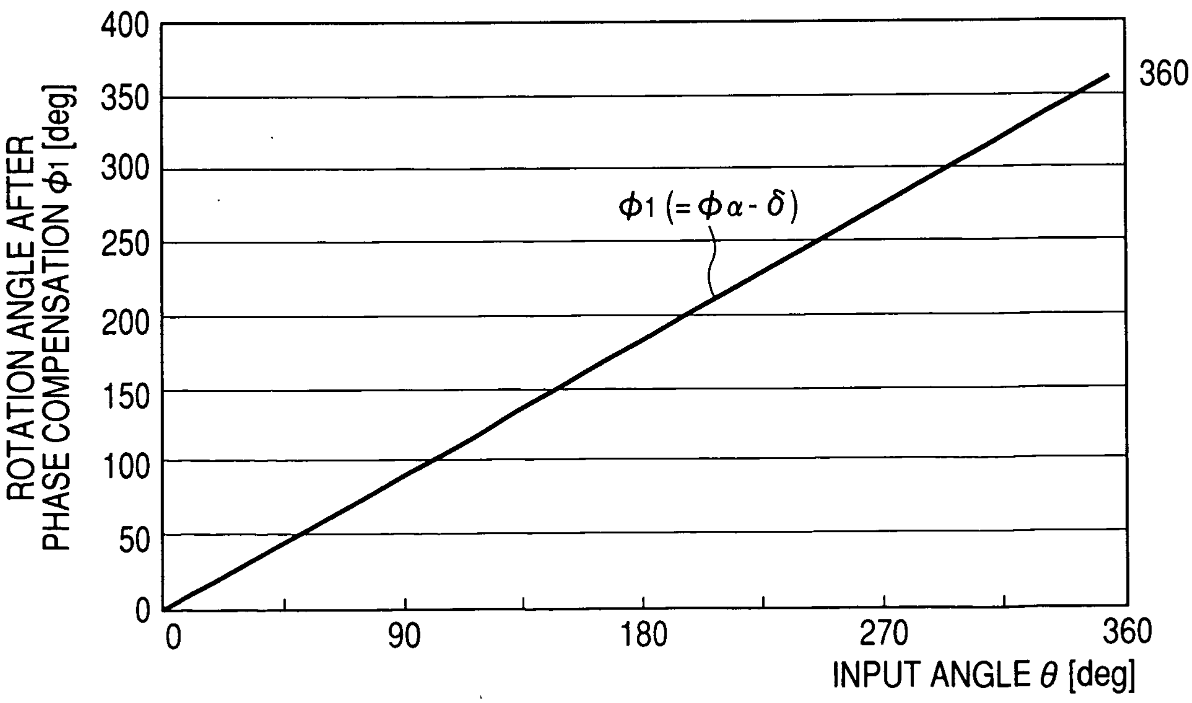
ROTATION ANGLE AFTER PHASE COMPENSATION Φ1 [deg]
400
350
300
250
200
150
100
50
0
0
90
180
270
360
INPUT ANGLE θ [deg]
360
Φ1 (=Φα - δ)

# FIG. 8

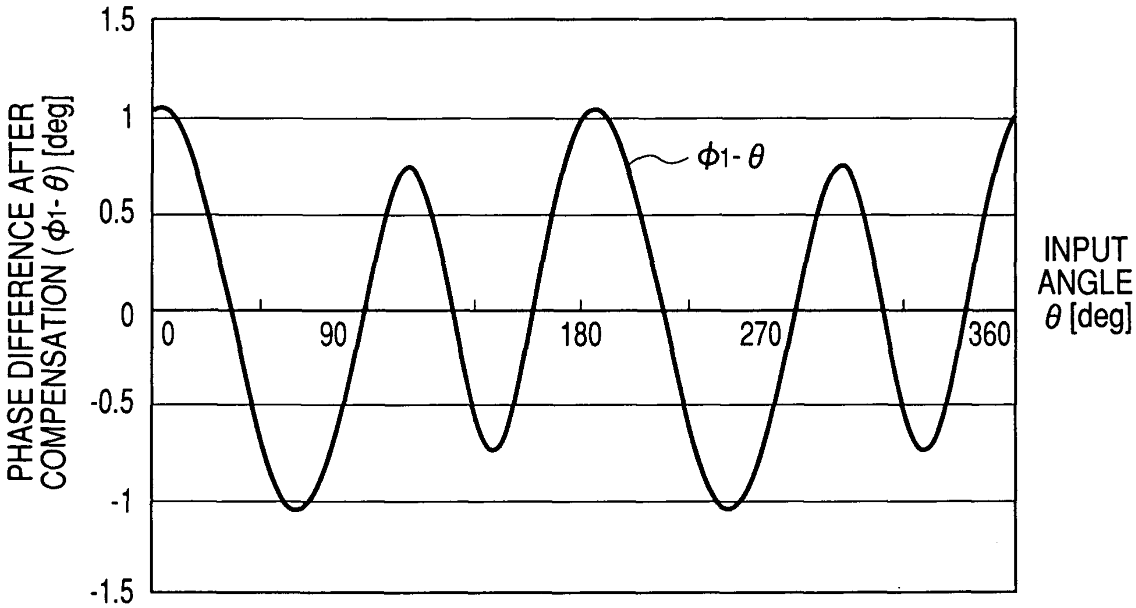
1.5
1
0.5
0
-0.5
-1
-1.5
PHASE DIFFERENCE AFTER COMPENSATION (ϕ1- θ) [deg]
ϕ1- θ
0
90
180
270
360
INPUT ANGLE θ [deg]

FIG. 9

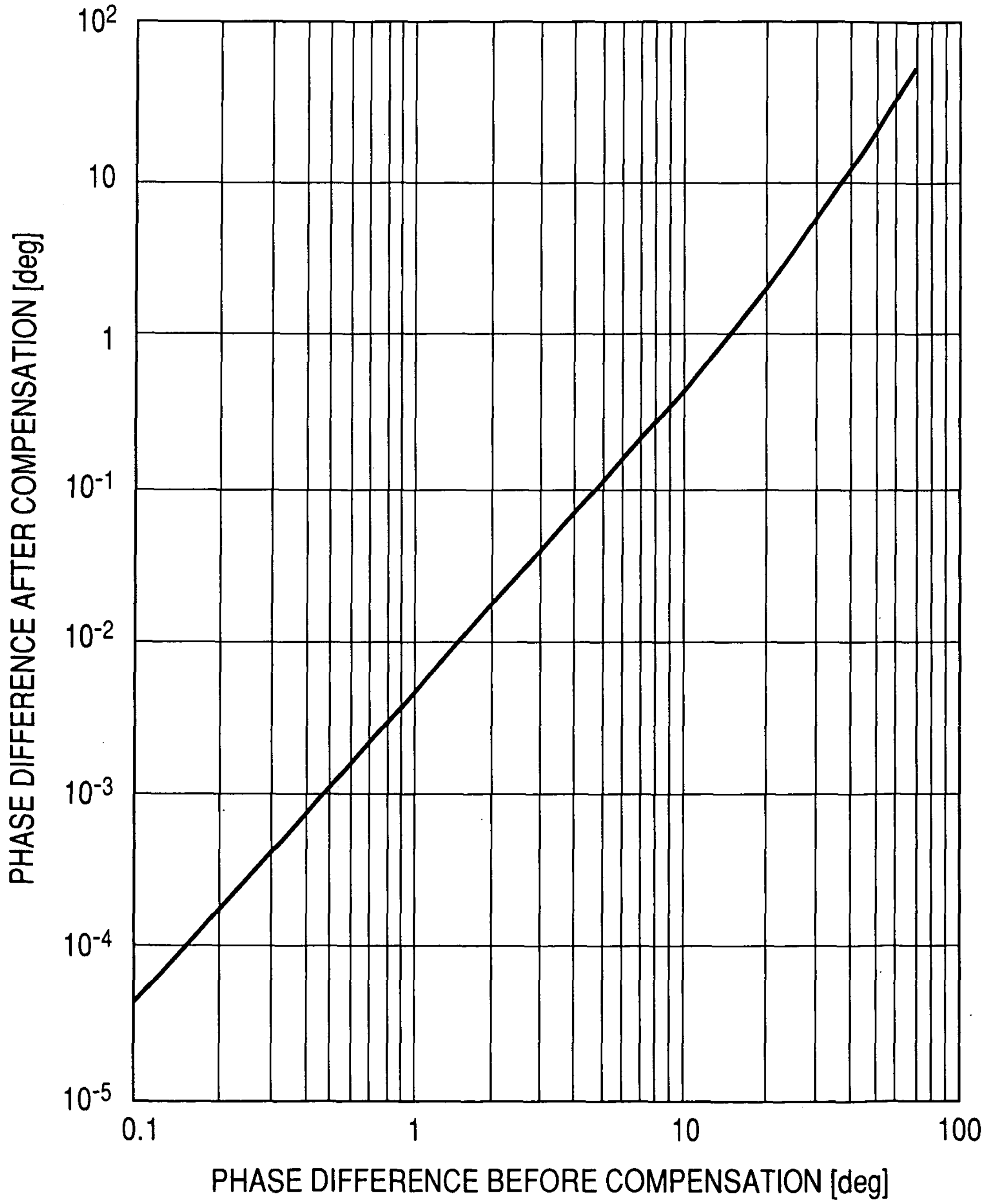
10^2
10
1
10^-1
10^-2
10^-3
10^-4
10^-5
PHASE DIFFERENCE AFTER COMPENSATION [deg]
0.1
1
10
100
PHASE DIFFERENCE BEFORE COMPENSATION [deg]

FIG. 10

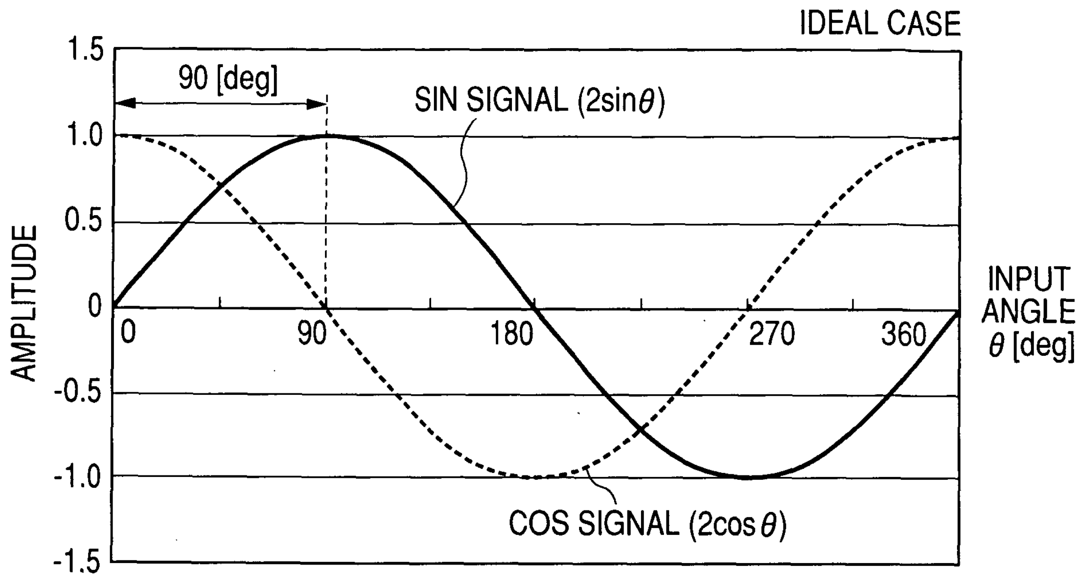
IDEAL CASE
90 [deg]
SIN SIGNAL (2sinθ)
COS SIGNAL (2cos θ)
AMPLITUDE
1.5
1.0
0.5
0
-0.5
-1.0
-1.5
0
90
180
270
360
INPUT ANGLE θ [deg]

FIG. 11

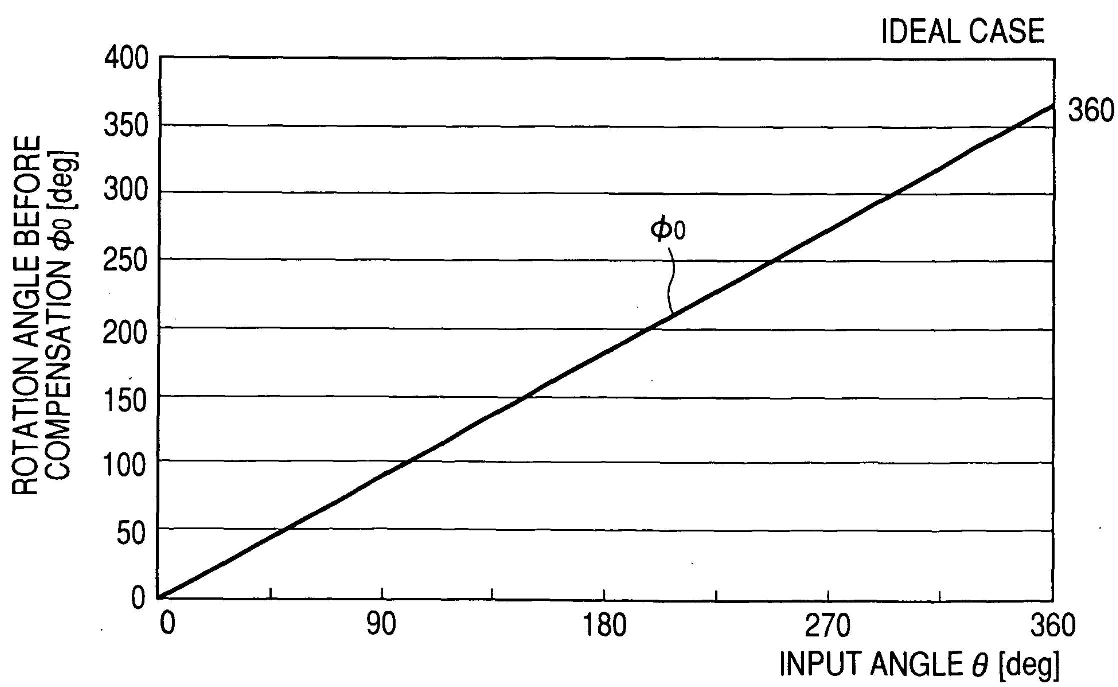
IDEAL CASE
ROTATION ANGLE BEFORE COMPENSATION Φ0 [deg]
400
350
300
250
200
150
100
50
0
Φ0
360
0
90
180
270
360
INPUT ANGLE θ [deg]

FIG. 12

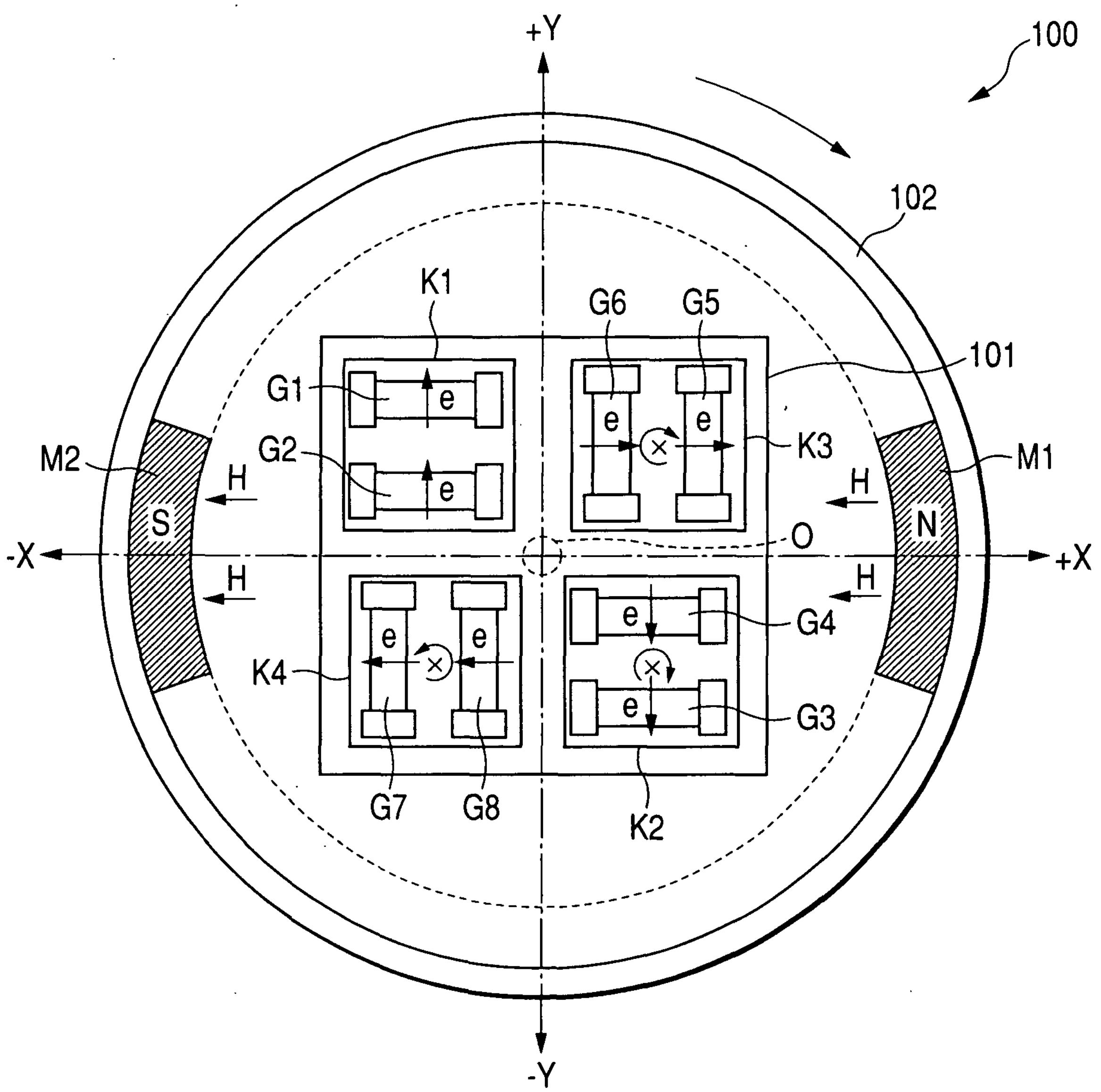
+Y
100
102
K1
G6
G5
101
G1
e
e
e
M2
G2
K3
M1
H
e
H
S
N
-X
O
+X
H
H
e
G4
e
e
K4
e
G3
G7
G8
K2
-Y

European Patent Office

# EUROPEAN SEARCH REPORT

Application Number
EP 04 02 9593

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | EP 0 652 419 A (SIEMENS AG)<br>10 May 1995 (1995-05-10)<br>* page 2, line 44 - page 4, line 9 * | 1-4<br><br>6,7 | G01D5/16<br>G01D5/244 |
| Y | EP 1 304 550 A (ALPS ELECTRIC CO LTD)<br>23 April 2003 (2003-04-23)<br>* page 4, lines 3-30; figure 2 * | 6,7 | |
| A | DE 101 63 504 A (SIEMENS AG)<br>10 July 2003 (2003-07-10)<br>* abstract * | 1-4 | |
| A | EP 0 602 479 A (SIEMENS AG)<br>22 June 1994 (1994-06-22)<br>* abstract * | 1-4 | |

TECHNICAL FIELDS SEARCHED (Int.Cl.7)
G01D

The present search report has been drawn up for all claims

| Place of search | Date of completion of the search | Examiner |
|---|---|---|
| Munich | 17 January 2005 | Stobbelaar, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1
EPO FORM 1503 03.82 (P04C01)

**ANNEX TO THE EUROPEAN SEARCH REPORT ON EUROPEAN PATENT APPLICATION NO.** EP 04 02 9593

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2005

| Patent document cited in search report | Publication date | Patent family member(s) | Publication date |
|---|---|---|---|
| EP 0652419 A | 10-05-1995 | EP 0652419 A1 | 10-05-1995 |
| | | AT 135814 T | 15-04-1996 |
| | | DE 59301986 D1 | 25-04-1996 |
| | | JP 7198417 A | 01-08-1995 |
| EP 1304550 A | 23-04-2003 | JP 2003121197 A | 23-04-2003 |
| | | EP 1304550 A1 | 23-04-2003 |
| | | US 2003070497 A1 | 17-04-2003 |
| DE 10163504 A | 10-07-2003 | DE 10163504 A1 | 10-07-2003 |
| EP 0602479 A | 22-06-1994 | DE 4242145 A1 | 16-06-1994 |
| | | EP 0602479 A2 | 22-06-1994 |

EPO FORM P0459

For more details about this annex : see Official Journal of the European Patent Office, No. 12/82